# EUROPEAN PATENT SPECIFICATION

(11) **EP 2 656 758 B1**
(45) Date of publication and mention of the grant of the patent: **16.09.2015**
(21) Application number: 11850151.9
(22) Date of filing: 22.12.2011
(51) Int. Cl.: A47J 37/06, A47J 27/00, A47J 37/01, F24B 1/00

(54) **OVEN COOKER**
KOCHOFEN
CUISINIÈRE COMPRENANT UN FOUR

(30) Priority: 23.12.2010 KR 20100134028; 03.03.2011 KR 20110019171; 27.08.2011 KR 20110086128
(43) Date of publication of application: 30.10.2013
(73) Proprietor: Hong, Jongho, Goyang Si, Gyeonggi-Do 411-735 (KR); Lee, Mihyun, Goyang Si, Gyeonggi-Do 411-735 (KR); Hong, Yerin, Goyang Si, Gyeonggi-Do 411-735 (KR)
(72) Inventor: Hong, Jongho, Goyang Si, Gyeonggi-Do 411-735 (KR); Lee, Mihyun, Goyang Si, Gyeonggi-Do 411-735 (KR); Hong, Yerin, Goyang Si, Gyeonggi-Do 411-735 (KR)
(74) Representative: Vossius & Partner Patentanwälte Rechtsanwälte mbB
(86) International application number: PCT/KR2011/009969
(87) International publication number: WO 2012/087041

(56) References cited:
- JP-A- 2000 005 049
- KR-A- 20050 107 677
- KR-B1- 100 907 608
- KR-Y1- 200 397 260
- KR-Y1- 200 448 883
- US-A- 1 438 792
- US-B1- 6 425 388

## Description

### Technical Field

The present invention relates to a combustion cooker, and more particularly, to an oven cooker in which heat is transferred through introduction, convection, and discharge of combustion air.

### Background Art

A direct-heat cooker (KR0937956 10) has been proposed, in which combustion gas used as a heat source of a cooker is introduced into a cooking chamber through a center region of the cooking chamber and makes direct contact with food, and the food is then heated.

A cooking utensil (US3987719) in which combustion gas communication holes are formed in an edge bottom portion of a cooking chamber has been proposed.

US 1,438,792 discloses a cooking device, such as a portable oven, comprising separate upper and lower dished members that form, being combined, a cooking chamber. Both members have inner and outer spaced shells, the space between the spaced shells constituting a flue channel surrounding the cooking chamber.

### SUMMARY OF INVENTION

### Technical problem

In the cooking utensil (US3987719), a combustion gas passage is formed between a combustion gas distribution chamber and a cooking chamber, but a combustion gas outlet port is not separately formed at the cooking chamber, so that combustion gas cannot be smoothly discharged from the cooking chamber which in turn makes it difficult to introduce new combustion gas into the cooking chamber and lowers heat transfer efficiency. If a combustion gas outlet port is formed in the top of a cooking chamber cover to smoothly discharge combustion gas from the cooking chamber, energy efficiency may be lowered because relatively hot combustion gas is discharged too early.

In the direct-heat cooker (KR0937956 10) in which a flame introduction passage is formed in a center region of the cooking chamber, hot flames make contact with food, and thus the surface of food may be partially burned. In addition, it is difficult to properly control the temperature of the cooking chamber according to food heating conditions, and the center region of the cooking chamber cannot be used as a space for cooking food.

An object of the present invention is to provide an oven cooker in which combustion gas used as a heat source can convect smoothly for efficient heat transfer while the combustion gas is introduced and discharged, thereby keeping the temperature of a cooking chamber uniform, allowing the center region of the cooking chamber to be used as a cooking area, and making it possible to select any of a direct heating method in which food is heated by direct contact with combustion gas and an indirect heating method in which food is heated while not making direct contact with combustion gas.

### Solution to Problem

To achieve the above-described object, the present invention provides a cooker mounted on top of a combustion type heating device used as a heat source, the oven cooker having a combustion gas distribution chamber formed between two walls of a dish-shaped cooker base and a combustion gas distribution unit that are sequentially stacked from a lower side, and a cooking chamber formed above the combustion gas distribution chamber by stacking the combustion gas distribution unit or the cooker base with a cooking chamber cover unit.

The cooker includes: a plurality of combustion gas communication ports between the combustion gas distribution chamber and the cooking chamber; and a plurality of combustion gas outlet ports between the cooking chamber and an outside of the cooker, wherein combustion gas convects smoothly in the cooking chamber in a condition that combustion gas introduced into the cooking chamber through the combustion gas communication ports does not collide with combustion gas flowing from the cooking chamber to the outside of the cooker, wherein the cooking chamber cover unit has a dual cover structure including an inner cover and an outer cover, and the inner cover is independently provided or detachably coupled to the outer cover, wherein an convection area between the inner cover and the outer cover communicates with the combustion gas distribution chamber, the combustion gas communication ports, and the outlet ports connected to the outside of the cooker.

### Advantageous Effects of Invention

According to the present invention, the communication ports (9) and the combustion gas outlet ports (10) are not overlapped with each other but alternately arranged along a lower edge portion of the cooking chamber, so that inflow of combustion gas and outflow of the combustion gas do not overlap each other or collide with each other in the cooking chamber 200 or the convection area 300 of the cooking chamber cover unit for smooth convection and efficient heat transfer. In addition, since hot combustion gas is introduced into the cooking chamber after the hot combustion gas is uniformly spread in the combustion gas distribution chamber, the temperature of the cooking chamber can be easily controlled.

The cooking chamber inner cover can be selectively attached according to cooking conditions, and both the rapid direct heating and hygienic indirect heating are possible. Furthermore, various cooking methods such as normal oven cooking, grill cooking, and low-moisture cooking are possible.

### Brief Description of Drawings

Fig. 1 is a top perspective view illustrating a cover separated from a vertical sidewall of a combustion gas distribution unit according to an embodiment of the present invention.
Fig. 2 is a cut-away view illustrating the cover attached according to the embodiment (Fig. 1) of the present invention.

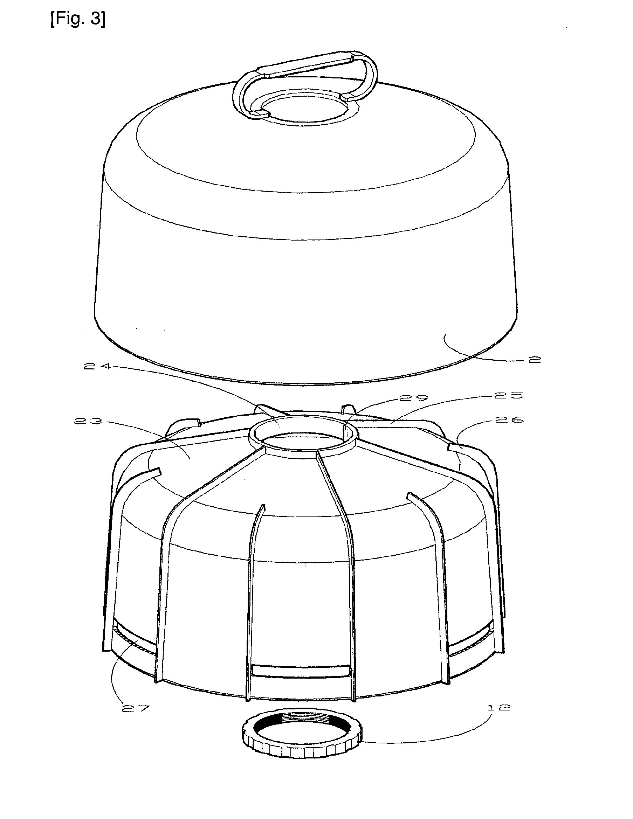

Fig. 3 is an exploded perspective view illustrating a cooking chamber cover unit according to the embodiment (Fig. 1) of the present invention.

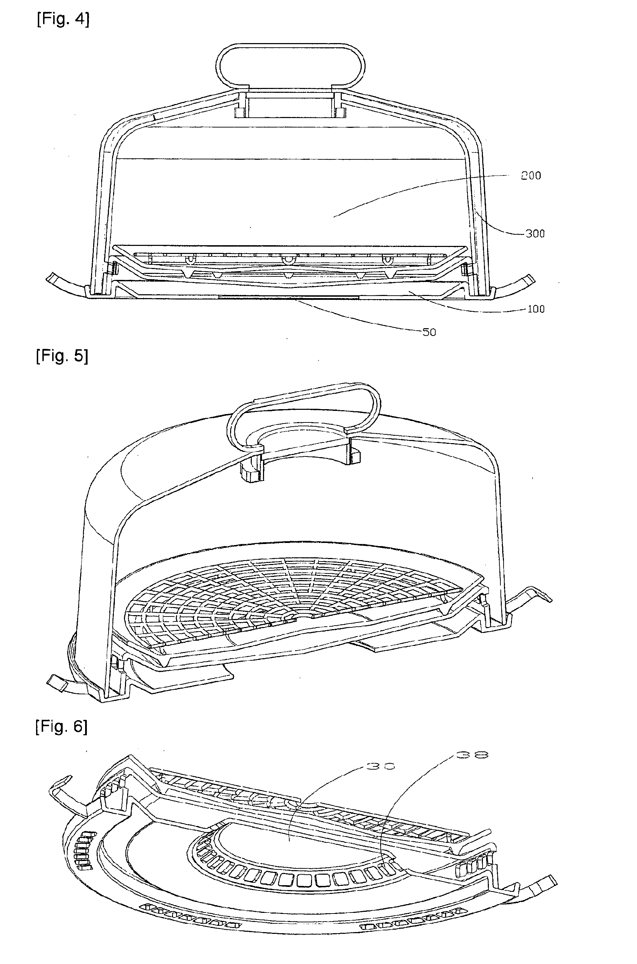

Fig. 4 is a sectional view illustrating a combustion gas introduction port, a combustion gas distribution chamber, a cooking chamber, and a convection area according to an embodiment of the present invention.
Fig. 5 is a cut-away view illustrating a state where a cooking chamber inner cover is not used according to an embodiment of the present invention.
Fig. 6 is a bottom cut-way view illustrating a cooker base including a flame reflection plated formed in one piece with the cooker base according to an embodiment of the present invention.
Fig. 7 is a bottom cut-away view for illustrating a method of coupling a combustion gas distribution unit with the cooker base according to an embodiment of the present invention.
Fig. 8 is a bottom cut-away view for illustrating a method of coupling the combustion gas distribution unit with the cooker base and a detachable flame reflection plate according to an embodiment of the present invention.
Fig. 9 is a sectional view illustrating a horizontal sidewall of the combustion gas distribution unit according to an embodiment of the present invention.
Fig. 10 is a plan view illustrating a cooker base (67) corresponding to the horizontal sidewall of the combustion gas distribution unit according to an embodiment of the present invention.
Fig. 11 is a top perspective view illustrating the horizontal sidewall of the combustion gas distribution unit according to an embodiment of the present invention.
Fig. 12 is a bottom perspective view illustrating the horizontally sidewall of the combustion gas distribution unit according to an embodiment of the present invention.
Fig. 13 is a vertical sectional view illustrating the horizontal sidewall of the combustion gas distribution unit according to an embodiment of the present invention.
Fig. 14 is an exploded perspective view illustrating the horizontal sidewall of the combustion gas distribution unit according to an embodiment of the present invention.
Fig. 15 is a cut-away view illustrating a fluid collection portion and a vertical combustion gas outlet ports of a cooker base according to an embodiment of the present invention.
Fig. 16 is a view illustrating exemplary convectional flows when an inner cover is not used according to an embodiment of the present invention.
Fig. 17 is a view illustrating exemplary convectional flows when the inner cover is used according to an embodiment of the present invention.

50; combustion gas introduction port
100; combustion gas distribution chamber
200; cooking chamber
300; combustion gas convection area between inner and outer covers of cooking chamber
1; cooking chamber cover handle
2; cooking chamber cover unit (cooking chamber outer cover)
11; cooking chamber window
12; cooking chamber inner cover fixing part
23; cooking chamber inner cover
24; cooking chamber inner cover insertion part
25; combustion gas barrier walls of cooking chamber inner cover
26; combustion gas guide barrier walls of cooking chamber inner cover
27; combustion gas introduction ports of cooking chamber inner cover
29; coupling guide portion of cooking chamber inner cover
3; food base
8; food base grill
22; supporting protrusion of food base
5; combustion gas distribution unit
7; grooves for discharging steam and regulating pressure
9; combustion gas communication ports
18; combustion gas contact and distribution portion
20; combustion gas updraft guide portion
21; sidewall of combustion gas distribution unit
6; cooker base
4; cooker handles
16; cooker base supporting portion
19; combustion gas updraft guide portion
10; combustion gas outlet ports
13; cooking chamber cover guide portion
15; coupling guide portion of combustion gas distribution unit
14; base portion for combustion gas distribution unit and cooking chamber cover
30; flame reflection plate
38; combustion gas introduction ports
17; heat source
51; horizontal coupling portion of combustion gas distribution unit sidewall
52; combustion gas distribution unit coupling portion of cooker base
53; combustion gas updraft guide slope of cooker base
54; combustion gas updraft guide slope of flame reflection plate
55; cooker base supporting portion
56; flame reflection plate
57; combustion gas introduction ports of cooker base
58; cooker base coupling portion of flame reflection plate
59; flame reflection plate coupling portion of cooker base
60; inner cover ring
61; combustion gas outlet ports
62; outer cover
63; inner cover
64; food base
65; combustion gas distribution unit
67; cooker base
68; combustion gas introduction ports
69; combustion gas communication ports
70; guide barrier walls
71; combustion gas updraft guide portions
72; combustion gas distribution unit supporting portions
73; combustion gas guide portions
74; combustion gas guide portions
75; groove for discharging steam and regulating pressure
76; combustion gas distribution unit sidewall
101; combustion gas introduction ports
102; combustion gas communication ports of combustion gas distribution unit
103; combustion gas distribution unit
107; food base
108; outer wall of cooking chamber outer cover
109; cooking chamber outer cover
110; combustion gas convection area between inner and outer covers
112; handles of cooking chamber cover unit
113; handles of cooker base
115; cooking chamber inner cover
117; inner wall of cooking chamber outer cover
118; cooking chamber outlet ports of cooking chamber distribution unit
119; cooking chamber cover fixing part
120; cooking chamber
121; cooking chamber thermometer
122; cooking chamber cover fixing part
123; coupling guide portion for combustion gas distribution unit and cooking chamber cover
125; cooking chamber distribution unit coupling portion of cooker base
127; cooker base
128; cooking chamber pressure regulation hole
130; combustion gas distribution chamber
131; cooking chamber cover fixing part
132; combustion gas outlet ports of cooker base
133; ports of food base for introducing combustion gas into cooking chamber
135; combustion gas outlet ports of food base
151; combustion gas outlet ports of cooker base
152; combustion gas communication ports
153; fluid collection portion of cooker base
155; combustion gas introduction ports of cooker base
157; cooking chamber cover supporting portion of cooker base
158; combustion gas distribution unit

### Best Mode

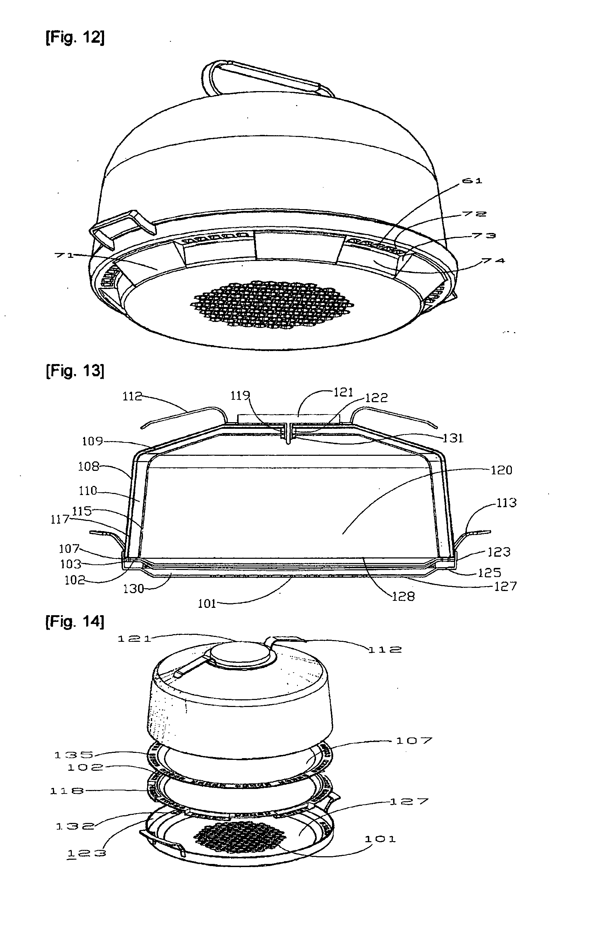

Provided is an oven cooker for use with a combustion type heating device, the oven cooker having a lower combustion gas distribution chamber and an upper cooking chamber that are formed by sequentially stacking a cooker base, a combustion gas distribution unit, and a cooking chamber cover unit (see Figs. 13 and 14). The oven cooker includes: the cooker base having a plurality of grill-shaped combustion gas introduction ports in a bottom center region thereof and a plurality of combustion gas outlet ports arranged at regular intervals along an edge portion thereof; the combustion gas distribution unit having a dish shape and placed on and stacked and coupled to the cooker base, the combustion gas distribution unit having combustion gas communication ports and outlet ports alternately arranged at up and down positions along an edge portion thereof; a food base placed on top of the combustion gas distribution unit and having combustion gas communication ports and outlet ports arranged along an edge portion thereof at positions corresponding to those of the combustion gas distribution unit; a cooking chamber inner cover detachably placed on top of the food base; an outer cover having a vacuum insulation layer and spaced apart from the inner cover to form a combustion gas convection area; and a thermometer having a sensor inserted through a top center portion of the cover unit for measuring inside temperatures of the cooking chamber.

### Mode for Invention

A cooker of the present invention will now be described in detail with reference to the accompanying drawings in which exemplary embodiments are illustrated. Parts of the cooker denoted by the same reference numeral may be given different names in order to indicate functions of the parts.

### Concept of Invention

If a direct-heat cooker has a combustion gas outlet port in the top of a cooking chamber cover, relatively hot combustion gas is discharged too early although combustion gas can be smoothly discharged. On the other hand, if no combustion gas outlet port or a small combustion gas outlet port is formed, combustion gas cannot be smoothly introduced and discharged. If a combustion gas introduction port is formed in the bottom center of a cooking chamber, and a combustion gas outlet port is formed in a lower portion of the sidewall of a cooking chamber cover or in an edge portion of a cooking chamber base, combustion gas can flow smoothly but the center region of the cooking chamber cannot be used as a cooking space, and food may easily be burned by contact with relatively hot combustion gas.

According to the present invention, communication ports between a combustion gas distribution chamber and a cooking chamber or a convection area, and outlet ports between the cooking chamber or the convection area and the outside of the cooker are alternately arranged along a lower edge portion of the cooking chamber. Therefore, combustion gas flowing upward along the sidewall of the cooking chamber does not overlap or collide with combustion gas flowing down in a center region of the cooking chamber to the outside of the cooking chamber, and thus smooth convection is possible. Furthermore, when an inner cover is attached to an outer cover for cooking in an indirect heating mode, combustion gas can be smoothly introduced into and discharged from the convection area formed between the inner cover and the outer cover, and thus efficient convection is possible.

### Configuration of Invention

The present invention relates to a cooker that can be used on top of a combustion type heating device used as a heat source. The cooker includes a cooker base 6, a combustion gas distribution unit 5, and a cooking chamber cover unit 2 that are sequentially stacked to form a lower combustion gas distribution chamber 100 and an upper cooking chamber 200 at neighboring regions. In the cooker, convection occurs in the cover unit 2 shaped like a dome, and the combustion gas distribution unit 100 having a duel dish shape is formed in a lower portion of the cooker.

The combustion gas distribution chamber 100 is a space between the cooker base 6 and the combustion gas distribution unit 5 and functions as a passage so that combustion gas introduced through a combustion gas introduction port 50 can be distributed to communication ports 9.

### Convection

Relatively hot combustion gas rises into the combustion gas distribution chamber 100 through the combustion gas introduction port 50 and is radially spread and distributed to the communication ports 9 while colliding with the bottom surface of the combustion gas distribution unit. After passing through the communication ports 9, the combustion gas flows in a combustion gas convection area 300 and is then discharged through combustion gas outlet ports 10. If an inner cover 23 is not used, after passing through the communication ports 9, the combustion gas rises along the inner surface of the outer cover 2 toward the center of the cooking chamber 200 and flows down to heat food, and is then distributed radially and discharged through the combustion gas outlet ports 10.

### Cooker Base

The cooker base 6 forms a bottom wall of the combustion gas distribution chamber 100. In a direction from center to periphery, the cooker base 6 includes the combustion gas introduction port 50, a cooker base supporting portion 16, a cooking chamber cover base portion 14 having the combustion gas outlet ports 10 and configured to support the combustion gas distribution unit and the cooking chamber cover unit, and a cooking chamber cover guide portion 13.

A combustion gas updraft guide portions 19 (71), a combustion gas distribution unit coupling guide portion 15, combustion gas guide portions 73 and 74, and combustion gas distribution unit supporting portions 72 may be formed depending on a sidewall structure and a coupling method of the combustion gas distribution unit and the cooker base.

The combustion gas updraft guide portion 19 (71) of the cooker base 6 may be connected to an inner or outer side of the cooking chamber cover base portion 14 in a radially alternating manner.

The combustion gas distribution unit coupling guide portion 15 may face a combustion gas distribution unit sidewall 21.

### Combustion Gas Introduction Port

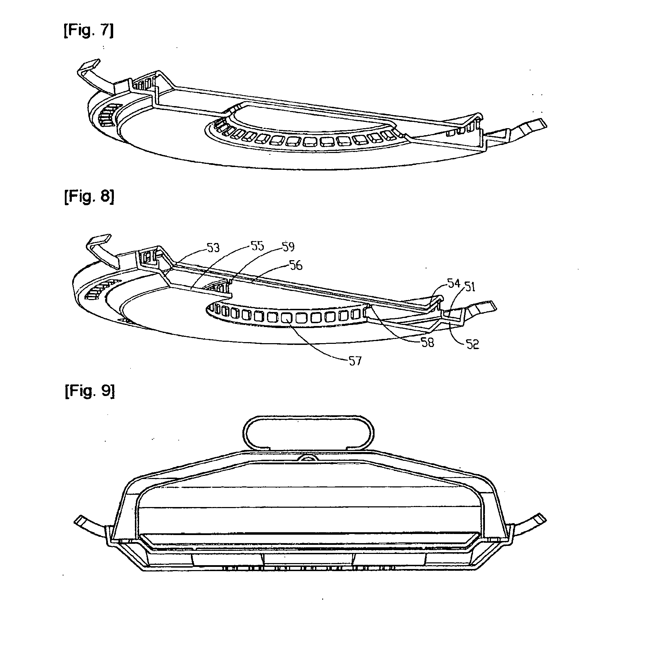

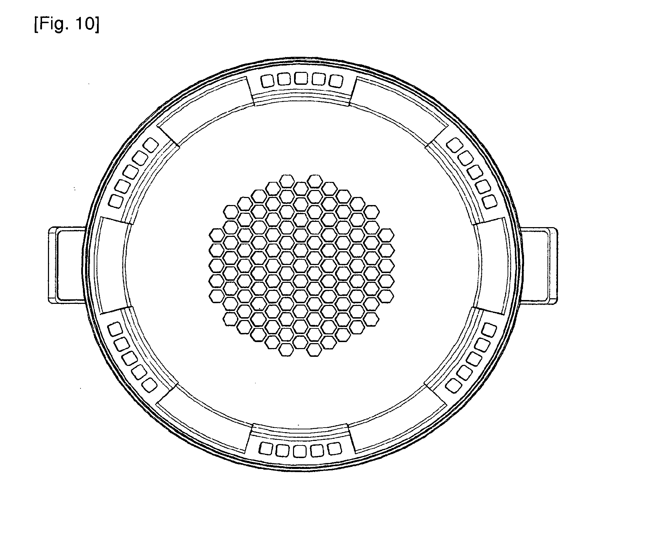

The combustion gas introduction port 50 is formed in the center of the cooker base. The combustion gas introduction port 50 may have a simple communication hole shape, or a flame reflection plate 30 and a grill 38 may be provided at the combustion gas introduction 50 (see Fig. 7). Alternatively, a plurality of small combustion gas introduction ports may be formed in a grill structure (see Fig. 10).

Combustion gas introduction ports 68 may be formed in a grill structure in the center region of the cooker base so as to prevent tilting of the cooker when the cooker is not placed on the center of a heat source. Combustion gas guides and reflection plates may be provided on the combustion gas introduction ports, respectively, and in this case, flow directions of combustion gas can be controlled by adjusting the directions of the combustion gas guides and the reflection plates.

For the case where the cooker is used on top of a heat source such as a radiation type halogen lamp electric heater, the bottom side of the cooker base may be flat for reliable contact with the heat source.

### Cooker Base Supporting Portion

The cooker base supporting portion 16 functions as a supporting portion for the cooker base and the cooker and forms the bottom wall of the combustion gas distribution chamber. Radial grooves may be formed on the cooker base supporting portion 16 so that the cooker can be exactly placed on the center region of a heat source.

### Combustion Gas Outlet Ports

The combustion gas outlet ports 10 are necessary for facilitating introduction of combustion gas into the cooking chamber, and for the case where the inner cover is attached, the combustion gas outlet ports 10 may be formed in the cooking chamber cover base portion 14 at positions outside the inner cover. Instead of forming the combustion gas outlet ports 10, the outer cover 2 and the cooking chamber cover base portion 14 may be configured in a manner such that the outer cover 2 and the cooking chamber cover base portion 14 are spaced apart from each other at regularly-spaced portions thereof. Additional combustion gas outlet ports that can be adjusted in open areas may be formed in the outer cover 2.

The combustion gas outlet ports are formed in a vertical or horizontal edge portion of the cooker base and are arranged alternately with the communication ports formed between the combustion gas distribution chamber and the cooking chamber.

The combustion gas outlet ports for discharging combustion gas from the cooking chamber or the convection area to the outside of the cooker may be arranged at regular intervals along the edge portion of the combustion gas distribution unit or the cooker base located at a lower edge portion of the cooking chamber. Alternatively, in the embodiment where contact regions and gap regions are alternately arranged between the edge portions of the cooker base and the combustion gas distribution unit, the combustion gas outlet ports may be formed at the contact regions through the cooker base and the combustion gas distribution unit.

### Cooking Chamber Cover Guide Portion

A guide portion may be additionally formed at an edge portion of the cooker base for guiding the cooking chamber cover.

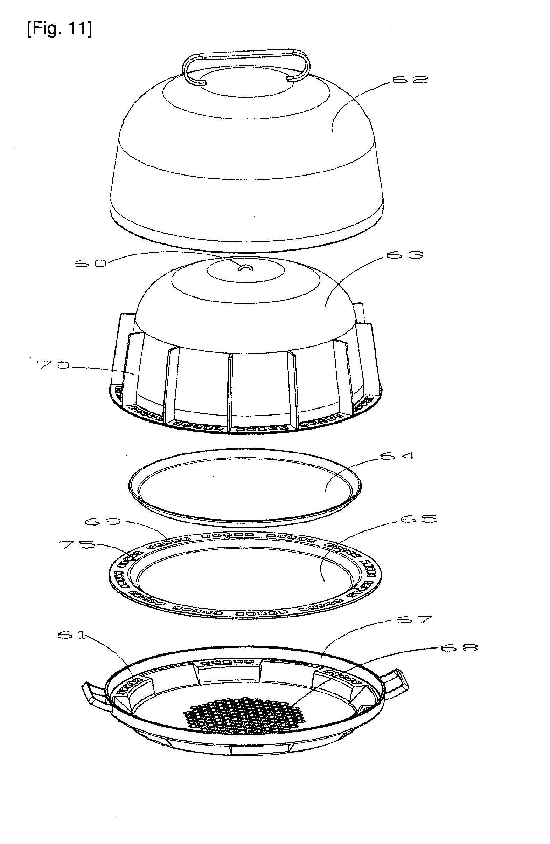

In an embodiment (see Fig. 8) where horizontal coupling portions are formed on a horizontal sidewall (see Fig. 11) and the sidewall of the combustion gas distribution unit 5, the cooking chamber cover guide portion also functions as a coupling guide portion for the combustion gas distribution unit 5.

Combustion gas outlet ports may be formed in the cooking chamber cover guide portion which is formed on the edge portion of the cooker base.

Another cooking chamber cover guide portion may be formed on an edge portion of the combustion gas distribution unit or a food base, and additional handles may be formed on the cooking chamber cover guide portion.

### Cooking Chamber Cover Base

The cooking chamber cover base portion is formed between the cooking chamber cover guide portion and the cooker base supporting portion or the combustion gas updraft guide portion. The cooking chamber cover base portion may have a doughnut shape for the vertical sidewall 21 or may be provided in the form of projects regularly spaced and aligned with portions where combustion gas outlet ports are formed.

That is, the cooking chamber cover base portion may be shaped or arranged according to the shape of the combustion gas distribution unit and whether the combustion gas distribution unit is attached or not. The cooking chamber cover base portion may be provided at the edge portions of the cooker base, the combustion gas distribution unit, and the food base.

### Cooker Handles

Cooker handles 4 are coupled to portions of the cooker base 6. For example, at least one cooker handle 4 may be coupled to the outside of the cooking chamber cover guide portion 13 or a lower face of the cooking chamber base portion 14. For example, two cooker handles 4 may be symmetrically coupled.

### Combustion Gas Distribution unit

The combustion gas distribution unit 5 forms a top wall of the combustion gas distribution chamber 100 and also a bottom wall of the cooking chamber 200. The combustion gas distribution unit 5 includes a dish-shaped horizontal portion 18 and a sidewall 21 (76), and the combustion gas communication ports 9 (69) and external grooves 7 (75) for discharging steam and regulating pressure are formed in the sidewall 21.

In an embodiment where concave-convex portions are not formed on the edge portion of the cooker base (see Fig. 14), concave-convex portions may be alternately formed horizontally along the edge portion of the combustion gas distribution unit as communication ports between the combustion gas distribution chamber and the cooking chamber and combustion gas outlet ports for discharging combustion gas from the cooking chamber. That is, concave-convex portions may be alternately formed along the edge portion of the combustion gas distribution unit as combustion gas communication ports between the combustion gas distribution chamber and the cooking chamber or the convection area and combustion gas outlet ports for discharging combustion gas from the cooking chamber or the convection area. In the embodiment (shown in Fig. 14), the edge portion of a food base 107 may extend so as to be overlapped with the edge portion of the combustion gas distribution unit, and communication ports thereof may be aligned.

In a state where the inner cover 23 is coupled, the combustion gas distribution unit 5 functions as a barrier wall covering the inner cover 23 and the cooking chamber 200 and preventing introduction of combustion gas into the cooking chamber.

### Combustion Gas Distribution Wall

A combustion gas distribution wall 18 may have a flat disc shape, a dish shape with an upwardly or downwardly sloped edge portion, or a concave-convex barrier wall shape.

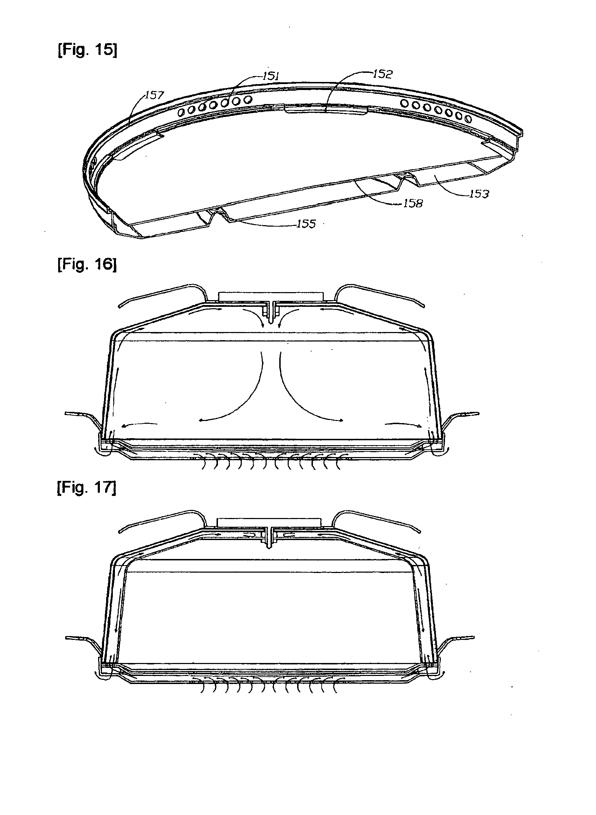

In an embodiment in which a center portion of the combustion gas distribution protrudes upward for the case where the food base is not provided, fluid exuding from food may flow to the edge portion of the distribution unit and may be then collected on the cooker base through communication ports. In an embodiment where the food base has a shape similar to that of the combustion gas distribution unit (see Fig. 15), fluid exuding from food may flow along a sloped face to an exuding fluid collection portion of the cooker base.

The combustion gas distribution wall 18 may have a combustion gas updraft guide portion 20 which is not an essential portion but helps combustion gas to rapidly flow from center to side portion of the combustion gas distribution chamber 100. A spiral protrusion may be formed on the bottom surface of the combustion gas distribution wall to induce swirling of combustion gas.

### Flame Reflection Plate

A flame reflection plate (30, 56) may be provided to prevent the combustion gas distribution wall 18 from making direct contact with combustion gas and excessively increasing in temperature. A protruded central flame reflection plate 30 may be formed in one piece with the cooker base 6, or a flame reflection plate 56 may be detachably coupled to a center portion 59 of the cooker base. A guide portion may be formed on the flame reflection plate to control the inflow direction of combustion gas, and the guide portion may have a spiral shape to induce swirling flows.

### Combustion Gas Communication Ports

The communication ports 9 (69) are formed in the edge-portion sidewall 21 of the combustion gas distribution unit 5 at positions facing a space between the combustion gas distribution unit and the cooker base. The communication ports 9 are radially arranged alternately with the combustion gas outlet ports 10 that are regularly arranged along the contact between the combustion gas distribution unit and the cooker base. Combustion gas flows from the combustion gas distribution chamber 100 to the cooking chamber 200 or the convection area 300 through the communication ports 9, and since the communication ports 9 and the combustion gas outlet ports 10 are not aligned with each other but are alternately arranged, the combustion gas introduced into the cooking chamber or the convection area from the combustion gas distribution chamber does not flow directly to the combustion gas outlet ports but flows upward to transfer heat by convection and is then discharged. The present invention is characterized by this flow of combustion gas.

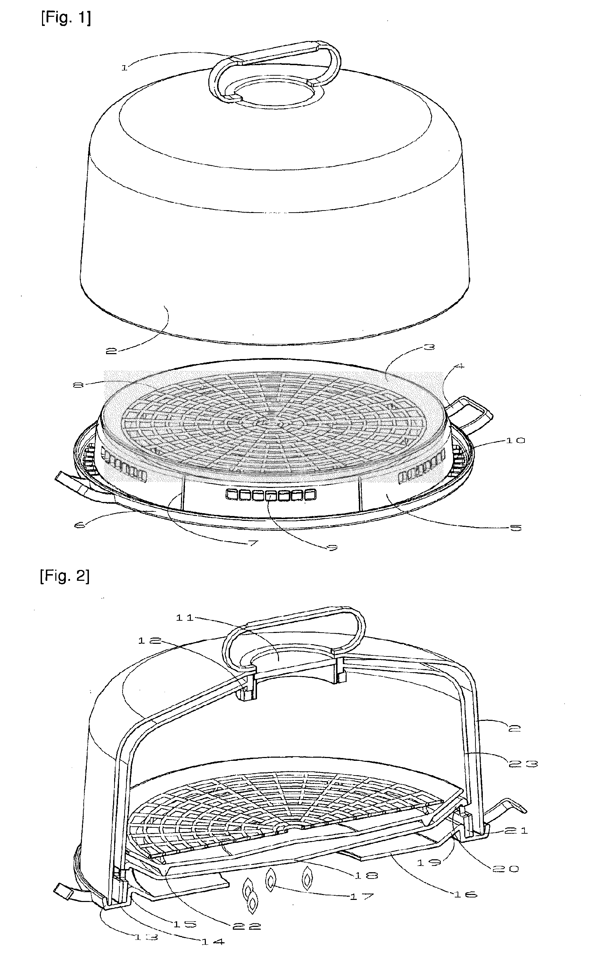

The combustion gas communication ports between the combustion gas distribution chamber and the cooking chamber or the convection area are arranged at regular intervals along the edge portion of the combustion gas distribution unit located at the lower edge portion of the cooking chamber. In the case where contact regions and gap regions are alternately arranged between the edge portions of the cooker base and the combustion gas distribution unit, combustion gas may flow from the combustion gas distribution chamber to the cooking chamber or the convection area through the gap regions and the communication ports. In this case, the gap regions may function as communication ports 152. The contact regions and the gap regions may be arranged alternately (see Figs. 11 and 14), side by side at inner and outer positions or upper and lower positions (see Figs. 1, 7, and 8) along the lower edge portion of the cooker.

### Sidewall of Combustion Gas Distribution unit

The sidewall 21 (76) which is an edge portion of the combustion gas distribution unit 5 has the communication ports 9 (69) that are radially arranged at regular intervals at coupling positions between the stacked cooker base 6 and the outer cover 2 (23).

At least a portion of the edge-portion sidewall 21 may make contact with the horizontal cooker base 6 as a horizontal contact portion, and combustion gas outlet ports may be arranged at regular intervals on the horizontal contact portion (see Fig. 9) or outlet ports and communication ports may be arranged radially and alternately (see Fig. 13).

In an embodiment where a vertical sidewall and a horizontal sidewall are coupled (see Fig. 9), combustion gas communication ports may be formed in the vertical sidewall, and combustion gas outlet ports may be formed in the horizontal sidewall.

To make the cooking chamber inner cover simple, combustion gas communication ports and outlet ports may be alternately arranged side by side in the horizontal sidewall (see FIG 11).

### Horizontal Sidewall of Combustion Gas Distribution unit

The communication ports for introducing combustion gas into the cooking chamber and the outlet ports are alternately arranged side by side along the horizontal sidewall so that combustion gas can be introduced into and discharged from the cooking chamber in vertically opposite directions, and when the inner cover is coupled, smooth convection is possible during introduction and discharge of combustion gas. In the embodiment, guide walls (71, 73, 74) are formed on the edge portion of the cooker base for guiding flows and distribution of combustion gas, and thus combustion gas flowing in a horizontal direction can smoothly rise toward the cooking chamber.

The combustion gas distribution unit supporting portions 72 are arranged horizontally and radially along the edge portion of the cooker base to support the combustion gas distribution unit, and combustion gas outlet ports 61 are formed in each of the combustion gas distribution unit supporting portions 72.

The horizontal sidewall of the combustion gas distribution unit may have a constant height, or may have an alternate concave-convex shape so that the communication ports and the outlet ports have different heights. In this embodiment, a concave-convex portion may not formed on the edge portion of the cooker base.

### Hole for Discharging Steam and Regulating Pressure

When cooking food with the inner cover 23 being attached, it may be necessary to discharge steam generated from the food and regulate the inside pressure of the cooking chamber caused by temperature changes, and thus a communication hole may be formed, as a passage from the inside of the cooking chamber 200 to the outside of the cooker, in a side of the inner cover 23 or in at least one of the sidewall 21 (76) of the combustion gas distribution unit and the inner cover 23 at a contact position between the sidewall 21 (76) and the inner cover 23. Instead, a gap between the inner cover 23 (63) and the sidewall 21 (76) may have the same function.

Since steam and gas generated from the inside of the cooking chamber may include foul and smell particles, the hole for regulating pressure may be positioned such that smell particles or fat particles can be decomposed by head of combustion gas rising after being discharged from the combustion gas distribution chamber to the convection area.

In an embodiment where the inner cover and the outer cover are coupled (see Fig. 13) and a thermometer is inserted in a coupling portion of the cover unit, a pressure regulation communication hole may be formed between a thermometer insertion sensor and the coupling part, and a pressure regulation hole may be formed to connect the cooking chamber and the convection area or connect cooking chamber to the outside of the cooker.

### Cooking Chamber Cover Unit

The cooking chamber cover unit 2 forms the top and lateral walls of the cooking chamber 200, and the inner cover may be detachably coupled to the outer cover 2 or may be independently provided.

The inner cover is placed on and connected to the sidewall 21 (76) of the combustion gas distribution unit. The inner cover includes combustion gas introduction ports 27 in an contact portion with the sidewall 21 at positions corresponding to the communication ports 9. A space between the inner cover 23 and the outer cover 2 is the convection area 300. The combustion gas introduction ports 27 may be formed in a lower end portion of the inner cover making contact with the vertical sidewall 21 at positions corresponding to the communication ports 9. For the edge portion of the horizontal sidewall 76, the inner cover may have a horizontal portion in which introduction ports and outlet ports are formed so that vertical barrier walls 70 can be stably supported and placed in exact positions. However, the inner cover may not have the horizontal portion.

The outer cover 2 may include at least one layer formed of a material having low heat conductivity, or may have a dual wall structure having a vacuum or air layer or an insulation layer for effective heat transfer from combustion gas to the inside of the cooking chamber.

An additional handle or a ring 60 may be coupled to the outer surface of the inner cover, and after cooking, the inner cover can be moved by hooking the ring with a hook instead of holding the ring 60 with a hand so as not to be burned because the ring 60 may be hot.

In an embodiment in which the inner cover and the outer cover are coupled, a coupling tube may be inserted in top center portions of the inner and outer covers, and a cooking chamber thermometer and a cooking chamber pressure regulation hole may be included in the coupling tube. Vertical or spiral protrusions may be formed on the inner surface of the outer cover in order to stably hold the inner cover and smoothly guide convection of combustion gas.

When cooking food with the inner cover 23 (63) coupled, the inside of the cooking chamber is little dried so that the food man be cooked by a low-moisture cooking or steaming method, and since the top, bottom, and lateral walls of the cooking chamber can be simultaneously heated, the temperature distribution of the inside of the cooking chamber may be uniform for preventing the food from being locally burned. That is, the entire region of food may be uniformly cooked at a relatively high temperature for good tastes.

After detaching the inner cover and the food base, a cooking utensil such as a pot or a baking frame may be placed in the cooking chamber for cooking food by various oven cooking methods.

### Guide Barrier Walls

Gide barrier walls 25 (26, 70) may be formed to partially separate the communication ports from the outlet ports in the convection area so that combustion gas introduced into the convection area through the communication ports can flow to the outlet ports after flowing through the convection area. The guide barrier walls may also function as positioning and spacing barrier walls when the inner cover and the outer cover are coupled to each other. The guide barrier walls may be sloped to induce swirling of combustion gas.

### Cooking Chamber Window

A window may be formed in at least a portion of the cooking chamber cover 2 (23) so that the state of food can be checked without opening the cooking chamber cover 2.

At least one cooking chamber cover handle 1 may be coupled to the outside of the cooking chamber cover.

### Cooking Chamber Thermometer

Since the temperature of the cooking chamber is the most important condition in oven cooking, it may be necessary to measure the temperature in real time. A communication port for a cooking chamber thermometer may be formed in the cooking chamber cover, and a probe of the cooking chamber thermometer may be inserted in the communication port for measuring the inside temperature of the cooking chamber in real time.

An insertion port for a temperature sensor may be formed in an inner cover coupling portion 119 for a simple structure, and an inner cover coupling portion thermometer insertion hole may also be formed in a top center portion of the cooking chamber cover.

A combustion gas or steam outlet port variable according to measured temperatures of the cooking chamber and a temperature set at the cooking chamber thermometer may be formed in the cooking chamber cover so as to cook food stably at a constant temperature under feedback temperature control.

### Food Base

At least one of the food base 3 and a food base grill 8 may be provided for preventing the bottom of the cooker from being contaminated by fluid exuding from food during cooking, preventing food from being burned by direct contact with the hot bottom of the cooker, effectively separating fluid exuding from food, and inducing smooth convection around food.

If necessary, a food base 107 may include a horizontally extended edge portion in which combustion gas communication ports such as ports 133 for introducing combustion gas into cooking chamber and outlet ports 135 for discharging combustion gas from the cooking chamber are formed at positions corresponding to communication ports 102 and 108 of a combustion gas distribution unit 103.

In an embodiment (see Fig. 14), concave-convex edge portions (102, 108) of the combustion gas distribution unit 103 are flat and not exposed so that the cooking chamber cover can be easily placed thereon and the external appearance can be improved. In the embodiment (see Fig. 14), the food base and the combustion gas distribution unit are spaced apart from each other, and thus an additional lower protrusion is not necessary.

The edge portion of the food base may be extend to the edge portion of the combustion gas distribution unit, and combustion gas communication holes may be formed in the overlapped portions thereof (see Fig. 14). In this case, the edge portion of the food base can be used as a cooking chamber cover base.

Various additional bases may be used for adjusting the contact area between the combustion gas distribution unit and the food base according to cooking methods or purposes, and controlling the rate of heat transfer.

### Passage for Collecting and Discharging Fluid Exuding From Food

Fluid exuding from food flowing on the top surface of the food base or the combustion gas distribution unit is guided to an inner collection area or discharged to an outer side. Discharged fluid may flow to a fluid collection portion of the food base or may be discharged from the cooker to the outside of the container through a part of combustion gas communication ports.

### Shape

The horizontal section of the cooker may be circular. However, the horizontal section of the cooker may have an elliptical, rectangular, or polygonal shape.

For the case of cooking a large amount food at a time, a rectangular horizontal sectional shape may be advantageous for efficiently using space.

The combustion gas distribution unit and the food base may have polygonal edge portions so that the combustion gas distribution unit and the food base can be easily coupled to each other at an exact angle.

The cooker of the present invention may have a rotatable or symmetric shape.

Parts of the cooker may have concave-convex structures so that the parts can be exactly coupled.

The communication ports, introduction ports, and outlet ports of the cooker according to the present invention may be multiple grill holes or simple communication holes.

The combustion gas introduction port of the cooker base may be large so that the combustion gas distribution unit can be directly placed on a heat source.

Parts of the cooker such as the cooking chamber cover, the flame reflection plate and the combustion gas introduction port of the cooker base, the method of coupling the cooker base and the combustion gas distribution unit, the sidewall structure of the combustion gas distribution unit, and the food base may be variously modified and combined in other embodiments.

### Materials

The combustion gas distribution unit 5 and the inner cover may include at least one layer formed of a highly conductive material such as copper, aluminum, and an alloy thereof. The combustion gas distribution unit 5, the inner surface of the inner cover facing the cooking chamber, and the food base 3 may be coated with a stainless alloy or a material capable of radiating infrared rays such as a ceramic material.

At least portions of parts of the cooker of the present invention may be formed of materials such as heat-resistant glass, enamel, ceramics, stones, and crystals, and a metal material may be used for making the cooker owing to simple manufacturing processes. The inner cover 23, the combustion gas distribution unit 5, and the food base 3 may include at least one of a material capable of radiating infrared rays and a non-adhesive coating material.

## Claims

1. An oven cooker mounted on top of a combustion type heating device used as a heat source, the oven cooker having a combustion gas distribution chamber (100, 130) formed between double walls of a dish-shaped cooker base (6, 67, 127) and a combustion gas distribution unit (5, 65, 103, 158) that are sequentially stacked from a lower side, a cooking chamber (120, 200) formed above the combustion gas distribution chamber by stacking the combustion gas distribution unit or the cooker base with a cooking chamber cover unit (2, 23, 62, 63, 109, 115), and a combustion gas introduction port (50, 57, 68, 101) formed in a bottom center portion of the cooker base, the oven cooker being **characterized by** comprising:
a plurality of combustion gas communication ports (9, 69, 102, 152) provided between the combustion gas distribution chamber and the cooking chamber; and
a plurality of combustion gas outlet ports (10, 61, 132, 151) provided between the cooking chamber and an outside of the cooker,
wherein the combustion gas communication ports (9, 69, 102, 152) and the combustion gas outlet ports (10, 61, 132, 151) are alternately arranged along a lower edge portion of the cooking chamber,
the communication ports (9, 69, 102, 152) are formed in gap regions between an edge portion of the cooker base and an edge portion of the combustion gas distribution unit,
the outlet ports (10, 61, 132, 151) are formed in one of contact regions between the edge portion of the cooker base and the edge portion of the combustion gas distribution unit, the edge portion of the cooker base, and a lower edge portion of the cooking chamber cover unit, and
while combustion gas introduced into the combustion gas distribution chamber through the combustion gas introduction port (50, 57, 68, 101) of the cooker base flows into the cooking chamber (120, 200) through the communication ports (9, 69, 102, 152) and is discharged to the outside of the cooker after convecting in the cooking chamber, flows of the combustion gas at the communication ports (9, 69, 102, 152) do not overlap or collide with flows of the combustion gas at the outlet ports (10, 61, 132, 151).

2. The oven cooker of claim 1, wherein the gap regions and the contact regions between the combustion gas distribution unit (5, 65, 103, 158) and the cooker base (6, 67, 127) are arranged alternately, side by side at inner and outer positions, or side by side at upper and lower positions along the lower edge portion of the cooking chamber (120, 200).

3. The oven cooker of claim 2, wherein at least one of the edge portion of the cooker base (6, 67, 127) and the edge portion of the combustion gas distribution unit (5, 65, 103, 158) has a plurality of concave and convex portions arranged radially at regular intervals for forming the gap regions and the contact regions.

4. The oven cooker of any one of the claims 1 to 3, wherein the cooking chamber cover unit (2, 23, 62, 63, 109, 115) has a dual cover structure comprising an inner cover (23, 63, 115) and an outer cover (2, 62, 109),
the inner cover (23, 63, 115) is independently provided or detachably coupled to the outer cover (2, 62, 109), an convection area between the inner cover and the outer cover communicates with the combustion gas distribution chamber (100, 130), the combustion gas communication ports (9, 69, 102, 152), and the outlet ports (10, 61, 132, 151) connected to the outside of the cooker, and
a cooking chamber pressure regulation hole (7, 75, 128) is formed in at least a side of the inner cover (23, 63, 115).

5. The oven cooker of claim 4, wherein a plurality of protrusions are formed on at least one of an outer surface of the inner cover (23, 63, 115) and an inner surface of the outer cover (2, 62, 109) as combustion gas guide barrier walls (26, 70), and the combustion gas guide barrier walls (26, 70) are arranged at regular intervals in a vertical or oblique direction for separating upward and downward flows of combustion gas in the convection area or supporting stable coupling of the inner cover (23, 63, 115) and outer cover (2, 62, 109).

6. The oven cooker of any one of claims 1 to 5, wherein at least one of a food base grill (8, 38) or a dish-shaped food base (3, 64, 107) is provided on an inner side of the cooking chamber (120, 200).

7. The oven cooker of any one of claims 1 to 6, wherein the outer cover (2, 62, 109) comprises at least one insulation layer.

8. The oven cooker of any one of claim 1 to 7, wherein a flame reflection plate (30, 56) or a grill having combustion gas introduction ports (38) is provided at a center portion of the cooker base (6, 67, 127).

9. The oven cooker of any one of claims 1 to 8, wherein the cooking chamber cover unit (2, 23, 62, 63, 109, 115) comprises at least one of a cooking chamber window (11) and a thermometer (121).

10. The oven cooker of any one of claim 1 to 9, wherein at least one of an inner surface of the inner cover (23, 63, 115) or the outer cover (2, 62, 109), the food base (3, 8, 38, 64, 107), and the combustion gas distribution unit (5, 65, 103, 158) comprises at least one of a material capable of radiating infrared rays and a non-stick coating.

## Patentansprüche

1. Kochofen, der oben auf eine Verbrennungsheizvorrichtung, die als eine Wärmequelle verwendet wird, montiert ist, wobei der Kochofen hat: eine Brenngasverteilungskammer (100, 130), die zwischen Doppelwänden einer schalenförmigen Kocherbasis (6, 67, 127) ausgebildet ist, und eine Brenngasverteilungseinheit (5, 65, 103, 158), die von einer Unterseite nacheinander aufeinander gestapelt sind, eine Kochkammer (120, 200), die oberhalb der Brenngasverteilungskammer ausgebildet ist, indem die Brenngasverteilungseinheit oder die Kocherbasis mit einer Kochkammerabdeckeinheit (2, 23, 62, 63, 109, 115) gestapelt werden, und eine Brenngaseinleitungsöffnung (50, 57, 68, 101), die in einer Unterseitenmitte der Kocherbasis ausgebildet ist, wobei der Kochofen **dadurch gekennzeichnet ist, dass** er aufweist:
mehrere Brenngasverbindungsöffnungen (9, 69, 102, 152), die zwischen der Brenngasverteilungskammer und der Kochkammer bereitgestellt sind; und
mehrere Brenngasauslassöffnungen (10, 61, 132, 151), die zwischen der Kochkammer und einem Äußeren des Kochers bereitgestellt sind,
wobei die Brenngasverbindungsöffnungen (9, 69, 102, 152) und die Brenngasauslassöffnungen (10, 61, 132, 151) abwechselnd entlang eines unteren Randabschnitts der Kochkammer angeordnet sind,
wobei die Verbindungsöffnungen (9, 69, 102, 152) in Lückenbereichen zwischen einem Randabschnitt der Kocherbasis und einem Randabschnitt der Brenngasverteilungseinheit ausgebildet sind,
wobei die Auslassöffnungen (10, 61, 132, 151) in einem der Kontaktbereiche zwischen dem Randabschnitt der Kocherbasis und dem Randabschnitt der Brenngasverteilungseinheit, dem Randabschnitt der Kocherbasis und einem unteren Randabschnitt der Kochkammerabdeckeinheit ausgebildet sind, und
wobei, während das Brenngas, das durch die Brenngaseinleitungsöffnung (50, 57, 68, 101) der Kocherbasis in die Brenngasverteilungskammer eingeleitet wird, durch die Verbindungsöffnungen (9, 69, 102, 152) in die Kochkammer (120, 200) strömt und nach außerhalb des Kochers abgegeben wird, nachdem es in der Kochkammer umgewälzt wurde, zu dem Brenngas an den Verbindungsöffnungen (9, 69, 102, 152) strömt, nicht mit Strömungen des Brenngases an den Auslassöffnungen (10, 61, 132, 151) überlappt oder zusammenstößt.

2. Kochofen nach Anspruch 1, wobei die Lückenbereiche und die Kontaktbereiche zwischen der Brenngasverteilungseinheit (5, 65, 103, 158) und der Kocherbasis (6, 67, 127) abwechselnd nebeneinander an inneren und äußeren Positionen oder nebeneinander an oberen und unteren Positionen entlang des unteren Randabschnitts der Kochkammer (120, 200) angeordnet sind.

3. Kochofen nach Anspruch 2, wobei ein Randabschnitt der Kocherbasis (6, 67, 127) und/oder der Randabschnitt der Brenngasverteilungseinheit (5, 65, 103, 158) mehrere konkave und konvexe Abschnitte hat, die in regelmäßigen Abständen radial angeordnet sind, um die Lückenbereiche und die Kontaktbereiche auszubilden.

4. Kochofen nach einem der Ansprüche 1 bis 3, wobei die Kochkammerabdeckeinheit (2, 23, 62, 63, 109, 115) eine doppelte Abdeckstruktur hat, die eine Innenabdeckung (23, 63, 115) und eine Außenabdeckung (2, 62, 109) aufweist,
wobei die Innenabdeckung (23, 63, 115) unabhängig bereitgestellt ist oder lösbar mit der Außenabdeckung (2, 62, 109) gekoppelt ist, wobei ein Umwälzbereich zwischen der Innenabdeckung und der Außenabdeckung mit der Brenngasverteilungskammer (100, 130), den Brenngasverbindungsöffnungen (9, 69, 102, 152) und den Auslassöffnungen (10, 61, 132, 151), die mit der Außenseite des Kochers verbunden sind, in Verbindung steht, und
wobei ein Kochkammerdruckregelungsloch (7, 75, 128) wenigstens auf einer Seite der Innenabdeckung (23, 63, 115) ausgebildet ist.

5. Kochofen nach Anspruch 4, wobei mehrere Vorsprünge auf einer Außenoberfläche der Innenabdeckung (23, 63, 115) und/oder einer Innenoberfläche der Außenabdeckung (2, 62, 109) als Brenngasführungssperrwände (26, 70) ausgebildet sind und die Brenngasführungssperrwände (26, 70) in regelmäßigen Abständen in einer vertikalen oder schrägen Richtung angeordnet sind, um Aufwärts- und Abwärtsströmungen von Brenngas in dem Umwälzbereich zu trennen oder die stabile Kopplung der Innenabdeckung (23, 63, 115) und der Außenabdeckung (2, 62, 109) zu unterstützen.

6. Kochofen nach einem der Ansprüche 1 bis 5, wobei ein Lebensmittelbasisgitter (8, 38) und/oder eine schalenförmige Lebensmittelbasis (3, 64, 107) auf einer Innenseite der Kochkammer (120, 200) bereitgestellt sind/ist.

7. Kochofen nach einem der Ansprüche 1 bis 6, wobei die Außenabdeckung (2, 62, 109) wenigstens eine Isolierschicht aufweist.

8. Kochofen nach einem der Ansprüche 1 bis 7, wobei eine Flammenreflexionsplatte (30, 56) oder ein Gitter mit Brenngaseinleitungsöffnungen (38) in einem mittleren Abschnitt der Kocherbasis (6, 67, 127) bereitgestellt ist.

9. Kochofen nach einem der Ansprüche 1 bis 8, wobei die Kochkammerabdeckeinheit (2, 23, 62, 63, 109, 115) ein Kochkammerfenster (11) und/oder ein Thermometer (121) aufweist.

10. Kochofen nach einem der Ansprüche 1 bis 9, wobei eine Innenoberfläche der Innenabdeckung (23, 63, 115) oder der Außenabdeckung (2, 62, 109) und/oder die Lebensmittelbasis (3, 8, 38, 64, 107) und/oder die Brenngasverteilungseinheit (5, 65, 103, 158) ein Material, das fähig ist, Infrarotstrahlung abzustrahlen, und/oder eine Antihaftbeschichtung aufweist/en.

## Revendications

1. Cuiseur à four monté au-dessus d'un dispositif chauffant de type à combustion utilisé comme une source de chaleur, le cuiseur à four ayant une chambre de distribution de gaz de combustion (100, 130) formée entre les doubles parois d'une base de cuiseur en forme de disque (6, 67, 127) et une unité de distribution de gaz de combustion (5, 65, 103, 158) qui sont empilées en séquence depuis un côté inférieur, une chambre de cuisson (120, 200) formée au-dessus de la chambre de distribution de gaz de combustion en empilant l'unité de distribution de gaz de combustion ou la base de cuiseur avec une unité de couvercle de chambre de cuisson (2, 23, 62, 63, 109, 115), et un orifice d'introduction de gaz de combustion (50, 57, 68, 101) formé dans une partie centrale inférieure de la base de cuiseur, le cuiseur à four étant **caractérisé en ce qu'**il comprend ;
une pluralité d'orifices de communication de gaz de combustion (9, 69, 102, 152) prévus entre la chambre de distribution de gaz de combustion et la chambre de cuisson ; et
une pluralité d'orifices de sortie de gaz de combustion (10, 61, 132, 151) prévus entre la chambre de cuisson et une partie extérieure du cuiseur,
dans lequel les orifices de communication de gaz de combustion (9, 69, 102, 152) et les orifices de sortie de gaz de combustion (10, 61, 132, 151) sont agencés en alternance le long d'une partie de bord inférieure de la chambre de cuisson,
les orifices de communication (9, 69, 102, 152) sont formés dans des régions d'espacement entre une partie de bord de la base de cuiseur et une partie de bord de l'unité de distribution de gaz de combustion,
les orifices de sortie (10, 61, 132, 151) sont formés dans une des régions de contact entre la partie de bord de la base de cuiseur et la partie de bord de l'unité de distribution de gaz de combustion, de la partie de bord de la base de cuiseur, et d'une partie de bord inférieure de l'unité de couvercle de chambre de cuisson, et
alors que le gaz de combustion introduit dans la chambre de distribution de gaz de combustion à travers l'orifice d'introduction de gaz de combustion (50, 57, 68, 101) de la base de cuiseur passe dans la chambre de cuisson (120, 200) à travers les orifices de communication (9, 69, 102, 152) et est évacué vers l'extérieur du cuiseur après convection dans la chambre de cuisson, les flux du gaz de combustion au niveau des orifices de communication (9, 69, 102, 152) ne chevauchent pas ou n'entrent pas en collision avec les flux du gaz de combustion au niveau des orifices de sortie (10, 61, 132, 151).

2. Cuiseur à four selon la revendication 1, dans lequel les régions d'espacement et les régions de contact entre l'unité de distribution de gaz de combustion (5, 65, 103, 158) et la base de cuiseur (6, 67, 127) sont agencées en alternance, côte à côte à des positions internes et externes, ou côte à côte à des positions supérieures et inférieures le long de la partie de bord inférieure de la chambre de cuisson (120, 200).

3. Cuiseur à four selon la revendication 2, dans lequel au moins l'une de la partie de bord de la base de cuiseur (6, 67, 127) et de la partie de bord de l'unité de distribution de gaz de combustion (5, 65, 103, 158) a une pluralité de parties concaves et convexes agencées radialement à intervalles réguliers pour former les régions d'espacement et les régions de contact.

4. Cuiseur à four selon l'une quelconque des revendications 1 à 3, dans lequel l'unité de couvercle de chambre de cuisson (2, 23, 62, 63, 109, 115) a une structure de couvercle double comprenant un couvercle interne (23, 63, 115) et un couvercle externe (2, 62, 109),
le couvercle interne (23, 63, 115) est prévu indépendamment ou couplé de manière détachable au couvercle externe (2, 62, 109), une zone de convection entre le couvercle interne et le couvercle externe communique avec la chambre de distribution de gaz de combustion (100, 130), les orifices de communication de gaz de combustion (9, 69, 102, 152), et les orifices de sortie (10, 61, 132, 151) reliés à l'extérieur du cuiseur, et
un orifice de régulation de pression de chambre de cuisson (7, 75, 128) est formé dans au moins un côté du couvercle interne (23, 63, 115).

5. Cuiseur à four selon la revendication 4, dans lequel une pluralité de saillies sont formées sur au moins l'une d'une surface externe du couvercle interne (23, 63, 115) et d'une surface interne du couvercle externe (2, 62, 109) comme parois barrières de guidage de gaz de combustion (26, 70), et les parois barrières de guidage de gaz de combustion (26, 70) sont agencées à intervalles réguliers dans une direction verticale ou oblique pour séparer les flux ascendant et descendant de gaz de combustion dans la zone de convection ou supporter le couplage stable du couvercle interne (23, 63, 115) et du couvercle externe (2, 62, 109).

6. Cuiseur à four selon l'une quelconque des revendications 1 à 5, dans lequel au moins l'une d'une grille de base alimentaire (8, 38) ou d'une base alimentaire en forme de disque (3, 64, 107) est prévue sur un côté interne de la chambre de cuisson (120, 200).

7. Cuiseur à four selon l'une quelconque des revendications 1 à 6, dans lequel le couvercle externe (2, 62, 109) comprend au moins une couche d'isolation.

8. Cuiseur à four selon l'une quelconque des revendications 1 à 7, dans lequel une plaque de réflexion de flamme (30, 56) ou une grille ayant des orifices d'introduction de gaz de combustion (38) est prévue au niveau d'une partie centrale de la base de cuiseur (6, 67, 127).

9. Cuiseur à four selon l'une quelconque des revendications 1 à 8, dans lequel l'unité de couvercle de chambre de cuisson (2, 23, 62, 63, 109, 115) comprend au moins l'une d'une fenêtre de chambre de cuisson (11) et d'un thermomètre (121).

10. Cuiseur à four selon l'une quelconque des revendications 1 à 9, dans lequel au moins l'une d'une surface interne du couvercle interne (23, 63, 115) ou du couvercle externe (2, 62, 109), de la base alimentaire (3, 8, 38, 64, 107) et de l'unité de distribution de gaz de combustion (5, 65, 103, 158) comprend au moins l'un d'un matériau capable d'irradier des rayons infrarouges et d'un revêtement antiadhésif.
